# EUROPEAN PATENT APPLICATION

(11) **EP 4 726 867 A1**
(43) Date of publication of application: **15.04.2026**
(21) Application number: 25194534.1
(22) Date of filing: 07.08.2025
(51) Int. Cl.: H01M 50/105, H01M 50/136, H01M 50/178, H01M 50/55, H01M 50/557, H01M 10/04, H01M 50/133

(54) **BATTERY CASE AND POUCH-TYPE SECONDARY BATTERY INCLUDING THE SAME**

(30) Priority: 11.10.2024 KR 20240138649
(71) Applicant: SAMSUNG SDI CO., LTD., Yongin-si, Gyeonggi-do 17084 (KR)
(72) Inventor: AN, Kangsik, Yongin-si, Gyeonggi-do 17084 (KR)
(74) Representative: Gulde & Partner

(57) **Abstract**

A battery case and a pouch-type (kind) secondary battery including the same are provided. The battery case includes an accommodating portion (111) accommodating an electrode assembly having an electrode lead (20) attached thereto and a sealing portion (130) provided along an outer periphery of the accommodating portion, sealing the accommodating portion, and having a side from which the electrode lead is drawn, in which the outer periphery of the accommodating portion is defined by a first edge on which the electrode lead is arranged and a second edge forming a preset angle with the first edge, and a bending portion having a set or predetermined depth is formed to extend in the sealing portion, and the sealing portion (130) is bent from the bending portion toward the accommodating portion (111).

## Description

### BACKGROUND

### 1. Field

One or more embodiments of the present disclosure relate to a battery case and a pouch-type (kind) secondary battery including the same.

### 2. Description of the Related Art

A secondary battery, unlike a primary battery which is not designed to be recharged, is chargeable and dischargeable.

Small-capacity secondary batteries are generally used in small portable electronic devices such as smartphones, feature phones, laptop computers, digital cameras, and camcorders. Large-capacity secondary batteries are extensively used as motor-driving power sources for hybrid vehicles and/or electric vehicles, or as power storage devices (power-storing batteries) for energy storage systems (ESSs) or power walls.

A pouch-type (kind) secondary battery is usually formed by sealing edges of a battery case to isolate (seal) the inside of the battery case from the outside. In this regard, one or more attempts have been made to improve the airtightness and insulation of the battery case.

The above-described information that serves as the background of the present disclosure is only for facilitating and improving the understanding of the background of the present disclosure, and may include information that does not constitute related art.

### SUMMARY

One or more aspects of embodiments of the present disclosure are directed toward a battery case and a pouch-type (kind) secondary battery each having improved airtightness and insulation by specifying a position at which a side of the battery case or the pouch-type (kind) secondary battery is bent to enable a protective member having a preset shape to be mounted.

However, technical aspects of the present disclosure are not limited to the above-mentioned technical solutions, and additional aspects will be set forth in part in the description which follows and, in part, will be apparent from the description, or may be learned by practice of the presented embodiments.

According to one or more embodiments of the present disclosure, a battery case includes an accommodating portion accommodating an electrode assembly having an electrode lead attached thereto and a sealing portion provided along an outer periphery of the accommodating portion, sealing the accommodating portion, and having a side from which the electrode lead is drawn, in which the outer periphery of the accommodating portion is defined by a first edge on which the electrode lead is arranged and a second edge forming a preset angle with the first edge, and a bending portion having a set or predetermined depth is formed to extend in the sealing portion, and the sealing portion is bent from the bending portion toward the accommodating portion.

In one or more embodiments, the bending portion may include a first bending portion that is spaced and/or apart (e.g., spaced apart or separated) from the first edge by a preset interval and extends in a direction parallel to the first edge.

In one or more embodiments, the sealing portion may include a terrace portion extending from the first edge and a wing portion connected to the terrace portion and extending from the second edge, the wing portion may be bent toward the accommodating portion, the terrace portion may be bent from the first bending portion toward the accommodating portion, and a side of the wing portion protruding in a direction in which the electrode lead is drawn may be bent toward the accommodating portion in the first bending portion.

In one or more embodiments, the battery case may further include a protective member having an insertion groove formed therein to allow a corner of the wing portion to be inserted thereinto and covering a preset region of the wing portion.

In one or more embodiments, the protective member may have a shape that is bent at a position corresponding to the first bending portion.

In one or more embodiments, the wing portion may include a first side portion covering a side of the accommodating portion and a second side portion covering a side of the terrace portion, and the protective member may include a first spacer covering the first side portion and a second spacer covering the second side portion.

In one or more embodiments, the bending portion may include a second bending portion that is spaced and/or apart (e.g., spaced apart or separated) from the second edge by a preset interval and extends in a direction parallel to the second edge.

In one or more embodiments, the sealing portion may include a notch portion formed at opposite ends of the bending portion.

In one or more embodiments, the battery case may further include an upper case and a lower case which face each other to form the sealing portion, in which the bending portion is formed in at least one of the upper case or the lower case.

In one or more embodiments, the bending portion may be formed by arranging a plurality of bending grooves having a set or predetermined depth at preset intervals.

In one or more embodiments, a depth (e.g., the set depth) of the bending portion may be at least about 40 µm, but not more than 60 about µm.

According to one or more embodiments the present disclosure, a pouch-type (kind) secondary battery includes an electrode assembly, an electrode lead attached to the electrode assembly, and a battery case including an accommodating portion accommodating the electrode assembly having the electrode lead attached thereto and a sealing portion provided along an outer periphery of the accommodating portion, sealing the accommodating portion, and having a side from which the electrode lead is drawn, in which the outer periphery of the accommodating portion is defined by a first edge on which the electrode lead is arranged and a second edge forming a preset angle with the first edge, and a bending portion having a set or predetermined depth is formed to extend in the sealing portion, and the sealing portion is bent from the bending portion toward the accommodating portion.

In one or more embodiments, the bending portion may include a first bending portion that is spaced and/or apart (e.g., spaced apart or separated) from the first edge by a preset interval and extends in a direction parallel to the first edge.

In one or more embodiments, the sealing portion may include a terrace portion extending from the first edge and a wing portion connected to the terrace portion and extending from the second edge, the wing portion may be bent toward the accommodating portion, the terrace portion may be bent from the first bending portion toward the accommodating portion, and a side of the wing portion protruding in a direction in which the electrode lead is drawn may be bent toward the accommodating portion in the first bending portion.

In one or more embodiments, the battery case may further include a protective member having an insertion groove formed therein to allow a corner of the wing portion to be inserted thereinto and covering a preset region of the wing portion.

In one or more embodiments, the protective member may have a shape that is bent at a position corresponding to the first bending portion.

In one or more embodiments, the wing portion may include a first side portion covering a side of the accommodating portion and a second side portion covering a side of the terrace portion, and the protective member may include a first spacer covering the first side portion and a second spacer covering the second side portion.

In one or more embodiments, the bending portion may include a second bending portion that is spaced and/or apart (e.g., spaced apart or separated) from the second edge by a preset interval and extends in a direction parallel to the second edge.

In one or more embodiments, the sealing portion may include a notch portion formed at opposite ends of the bending portion.

In one or more embodiments, the battery case may further include an upper case and a lower case which face each other to form the sealing portion, in which the bending portion is formed in at least one of the upper case or the lower case.

In one or more embodiments, the bending portion may be formed by arranging a plurality of bending grooves having a set or predetermined depth at preset intervals.

### BRIEF DESCRIPTION OF DRAWINGS

The accompanying drawings attached to this disclosure illustrate example embodiments of the present disclosure, and serve to further understand the technical idea of the present disclosure together with the detailed description of the present disclosure described in more detail later, so the present disclosure should not be construed as being limited to the matters shown in such drawings. In addition, the above and other aspects, features, and advantages of certain embodiments of the present disclosure will be more apparent from the following description taken in conjunction with the accompanying drawings.
FIG. 1 is an exploded perspective view of a pouch-type (kind) secondary battery according to one or more embodiments of the present disclosure;
FIG. 2 is a perspective view of a state of the pouch-type (kind) secondary battery of FIG. 1 being sealed according to one or more embodiments of the present disclosure;
FIGS. 3 to 6 are views showing a process of partially deforming a shape of the pouch-type (kind) secondary battery of FIG. 2 according to one or more embodiments of the present disclosure;
FIG. 7 is a cross-sectional view taken along the line I-I' of FIG. 6 according to one or more embodiments of the present disclosure; and
FIG. 8 is a cross-sectional view taken along the line II-II' of FIG. 6 according to one or more embodiments of the present disclosure.

### DETAILED DESCRIPTION

Hereinafter, example embodiments of the present disclosure will be described in more detail with reference to the accompanying drawings. The terms and words used in the present disclosure and the appended claims should not be construed as being limited to ordinary or dictionary meanings, and should be interpreted as meanings and concepts consistent with the technical idea of the disclosure based on the principle that the present inventors may appropriately or suitably define the concept of the terms to describe their invention in the best way. Therefore, it should be understood that the configurations shown in the drawings and embodiments described in this disclosure are merely explanatory embodiments of the present disclosure, and do not represent all of the technical ideas of the present disclosure, such that there may be one or more suitable equivalents and variations that replace them at the time of filing the present application.

When used herein, "comprise(s)/comprising" and/or "include(s)/including" and/or "has(have)/having" specify mentioned shapes, numbers, steps, operations, members, components, and/or presence of these groups, and do not exclude the presence or addition of one or more different shapes, numbers, operations, members, components, and/or groups. Additionally, the terms "comprise(s)/comprising," "include(s)/including," "has(have)/having", or other similar terms include or support the terms "consisting of" and "consisting essentially of," indicating the presence of stated shapes, numbers, steps, operations, members, and/or components, without or essentially without the presence of other shapes, numbers, steps, operations, members, and/or components. Further, the utilization of "may" when describing embodiments of the present disclosure refers to "one or more embodiments of the present disclosure"

To help understanding of the present disclosure, the accompanying drawings may not be shown according to the actual scale, but the dimensions of some components may be exaggerated. The same reference numeral may be given to the same component in different embodiments.

The statement that two comparison targets are 'the same' as each other may refer to that they are 'substantially the same' as each other. Thus, embodiments in which they are 'substantially the same' as each other may include embodiments in which they have a deviation regarded as a low level, e.g., a deviation of 5 % or less. When a uniform parameter is uniform in a set or predetermined area, it may refer to that it is substantially uniform from an average point of view.

Although terms "first," "second," and/or the like, may be used to describe one or more suitable components, these components are not limited by these terms. These terms are only used to distinguish one component from other components, and unless specifically stated to the contrary, a first component may be referred to as a second component.

Throughout the disclosure, unless specially stated to the contrary, each component may be singular or plural. For example, as used herein, the singular forms "a," "an," and "the" are intended to include the plural forms as well, unless the context clearly indicates otherwise.

When a component is arranged on "a top portion (or a bottom portion)" of another component or "on (or under)" the other component, it may refer to not only embodiments in which the component is arranged adjacent to a top surface (or a bottom surface) of the other component, but also embodiments in which one or more components may be interposed between the other component and the component arranged on (or under) the other component. In contrast, if (e.g., when) a component is referred to as being "directly on" or "directly under" another element, there are no intervening component present therebetween.

When a component is described as being "connected", "coupled", or "connected" to another component, it should be understood that the components are directly connected or connectable to each other, but another component may be "interposed" between the components, or the components may be "connected", "coupled", or "connected" to each other through another component. When a portion is electrically coupled to another portion, this may include not only embodiments in which they are directly connected to each other, but also embodiments in which they are connected with another element therebetween.

Throughout the disclosure, "A and/or B" or "A or B" or "A/B" may refer to A, B, or A and B unless specially stated otherwise. For example, "and/or" and "or" and "/" may include all or any combination of a plurality of items listed. "C to D" may refer to at least C but not more than D, unless specially stated otherwise. Expressions such as "at least one of," "one of," and "selected from," when preceding a list of elements, modify the entire list of elements and do not modify the individual elements of the list. For example, "at least one of a, b, or c," "at least one selected from a, b, and c," "at least one selected from among a to c," and/or the like, may indicate only a, only b, only c, both (e.g., simultaneously) a and b, both (e.g., simultaneously) a and c, both (e.g., simultaneously) b and c, all of a, b, and c, or variations thereof.

The terminology used herein is for the purpose of describing embodiments of the present disclosure and is not intended to be limiting of the present disclosure.

Hereinafter, a first direction DR1 may be defined as a direction in which an electrode lead 20 is drawn from a pouch-type (kind) secondary battery 1, a second direction DR2 may be defined as a width direction of the pouch-type (kind) secondary battery 1, and a third direction DR3 may be defined as a thickness direction of the pouch-type (kind) secondary battery 1.

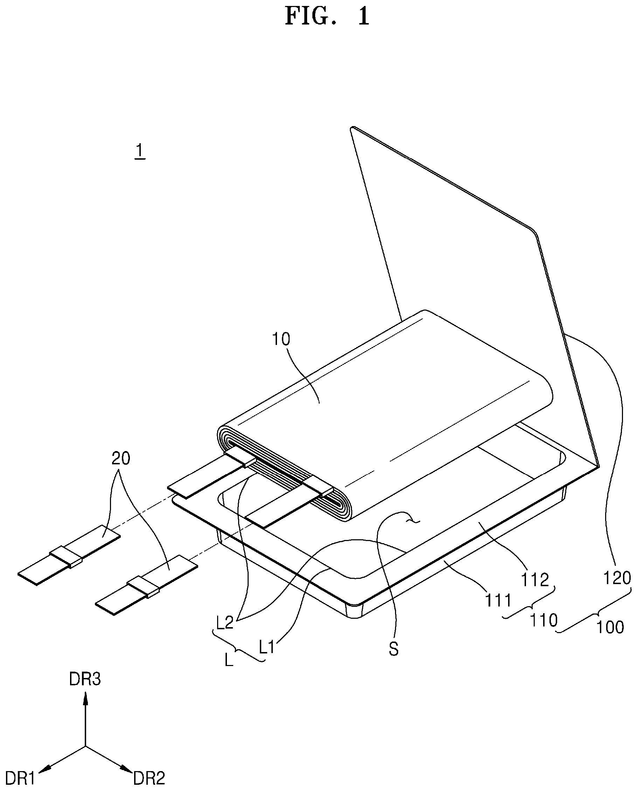

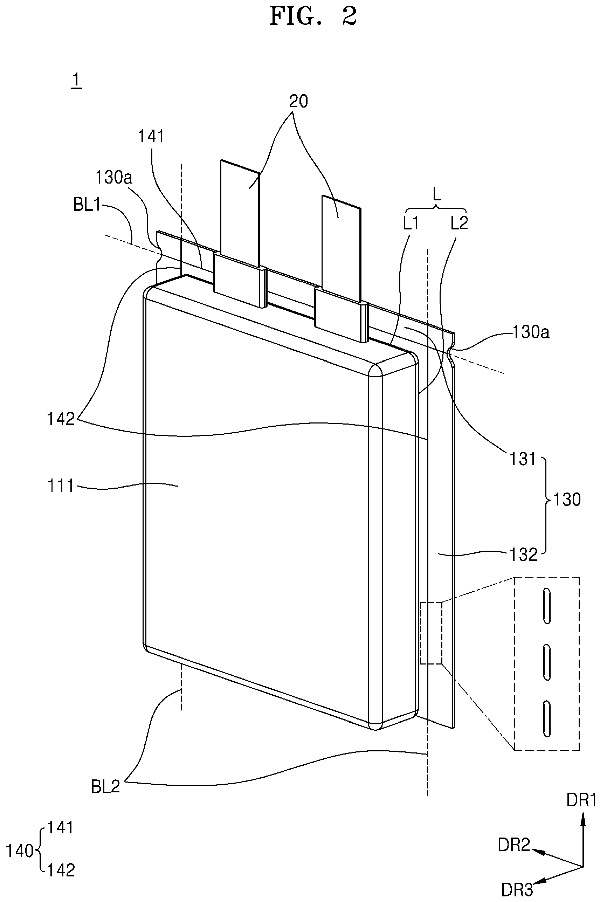

FIG. 1 is an exploded perspective view of a pouch-type (kind) secondary battery according to one or more embodiments of the present disclosure, and FIG. 2 is a perspective view of a state of the pouch-type (kind) secondary battery of FIG. 1 being sealed according to one or more embodiments of the present disclosure.

Referring to FIG. 1 and FIG. 2, a pouch-type (kind) secondary battery 1 according to one or more embodiments of the present disclosure may be easily bent by forming a bending portion 140 in a battery case 100 in a sealed state.

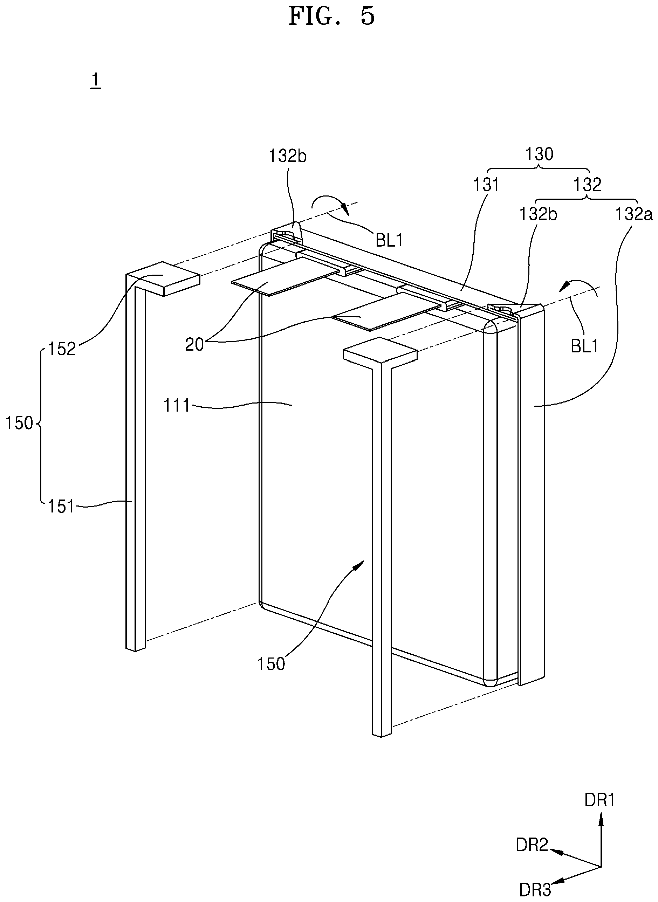

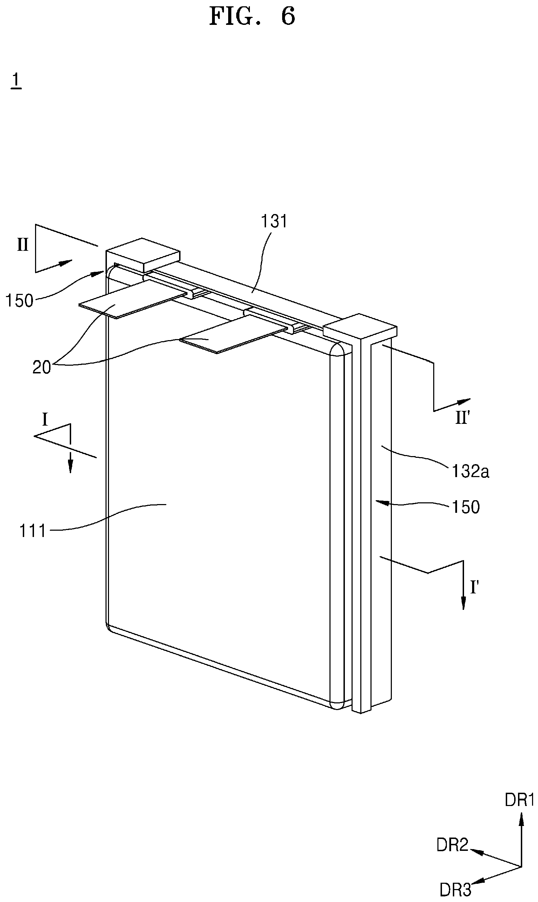

The pouch-type (kind) secondary battery 1 according to one or more embodiments of the present disclosure may prevent disconnection of an electrode lead 20 by specifying a bending position of the battery case 100, and may previously determine a bent shape of a protective member 150 (see FIG. 5 and FIG. 6) attached for insulation, thereby improving the efficiency of a production process of the protective member 150.

Referring to FIG. 1, the pouch-type (kind) secondary battery 1 according to one or more embodiments of the present disclosure may include an electrode assembly 10, the electrode lead 20, and the battery case 100.

The electrode assembly 10 may be formed by winding or laminating a laminate of a plurality of electrode plates and separators formed in a thin plate shape or a film shape (e.g., in a form of a plate or a film) . If (e.g., when) the electrode assembly 10 is a wound laminate, a winding axis may be parallel to a longitudinal direction of the battery case 100. In one or more embodiments, the electrode assembly 10 may be a stack type (kind) rather than a winding type (kind), and the shape or the number of electrode assemblies 10 is not limited in the present disclosure.

The electrode assembly 10 may include an electrode. The electrode may extend on each electrode plate of the electrode assembly 10 and may serve as either a negative electrode or a positive electrode.

The electrode lead 20 may be electrically connected to the electrode extending in the electrode assembly 10. The electrode lead 20 may be exposed to the outside of the battery case 100 while being electrically connected to the electrode assembly 10.

In one or more embodiments, the electrode lead 20 may be arranged between a lower case 110 and an upper case 120 such that if (e.g., when) the lower case 110 and the upper case 120 are connected to each other, an accommodating portion 111 may be electrically connected to the outside.

This may allow the electrode assembly 10 to be electrically connected to an external component by the electrode lead 20.

Referring to FIG. 1, the battery case 100 may accommodate and seal the electrode assembly 10 therein and may include the lower case 110 and the upper case 120.

Referring to FIG. 1, the lower case 110 may include the accommodating portion 111 that accommodates the electrode assembly 10 and an edge portion 112.

The accommodating portion 111 may include an accommodating space S that accommodates the electrode assembly 10 therein. The accommodating portion 111 may be formed to have a preset depth in an outer periphery L such that the electrode assembly 10 having a set or predetermined thickness may be accommodated in the accommodating space S.

Referring to FIG. 1, the outer periphery L forming a boundary of the accommodating portion 111 may be formed in the accommodating portion 111. The outer periphery L of the accommodating portion 111 may be defined by a first edge L1 on which the electrode lead 20 is arranged, and a second edge L2 that forms a preset angle with the first edge L1.

The first edge L1 may be located in a direction in which the electrode lead 20 is drawn out in the outer periphery L of the accommodating portion 111. For example, the first edge L1 may be located in the first direction DR1 in the outer periphery L of the accommodating portion 111. For example, the first edge L1 may extend in a direction that crosses the first direction DR1 in the outer periphery L of the accommodating portion 111.

The second edge L2 may form a preset angle with the first edge L1 at opposite ends of the first edge L1. In one or more embodiments, the second edge L2 may be formed to extend in the first direction DR1 from the opposite ends of the first edge L1. For example, the second edge L2 may be located in the second direction DR2 in the outer periphery L of the accommodating portion 111. For example, the second edge L2 may extend in a direction that crosses the second direction DR2 in the outer periphery L of the accommodating portion 111.

The edge portion 112 may be connected to the accommodating portion 111. In one or more embodiments, the edge portion 112 may be formed to extend from the outer periphery of the accommodating portion 111. The edge portion 112 may extend from the first edge L1 and the second edge L2, and may be formed integrally (e.g., as a monolithic body).

The edge portion 112 may have a set or predetermined width and may provide a region where a sealing portion 130 is to be formed opposite to (e.g., facing) the upper case 120 as described in more detail later.

The upper case 120 may have an area that covers the accommodating portion 111 of the lower case 110 to spatially separate the accommodating portion 111 from the outside, opposite to (e.g., facing) the lower case 110.

The upper case 120 may cover the lower case 110 such that a set or predetermined some region thereof may face the edge portion 112 of the lower case 110.

Regions where the upper case 120 and the lower case 110 face each other may be connected by heat fusion, and/or the like. However, the embodiments of present disclosure are not limited thereto, and one or more suitable methods for connecting two surfaces opposite to (e.g., facing) each other may be adopted to connect the upper case 120 and the lower case 110.

In FIG. 1, the accommodating portion 111 is illustrated as being provided in the lower case 110, but embodiments of the present disclosure are not limited thereto. In one or more embodiments, the accommodating portion 111 may be provided in each of the lower case 110 and the upper case 120 such that the lower case 110 and the upper case 120 face each other to form an accommodating space (the accommodating space S).

Referring to FIG. 1 and FIG. 2, the lower case 110 and the upper case 120 may face each other to form the sealing portion 130. In one or more embodiments, the sealing portion 130 may be formed by the edge portion 112 of the lower case 110 and the upper case 120 opposite to (e.g., facing) each other.

Referring to FIG. 2, the sealing portion 130 may be provided along the outer periphery L of the accommodating portion 111. The sealing portion 130 may be formed integrally by extending from the outer periphery L of the accommodating portion 111. For example, the sealing portion 130 may cover (e.g., seal) the accommodating portion 111 to make the accommodating space S as a closed space.

The sealing portion 130 may seal the accommodating portion 111. The sealing portion 130 may seal the accommodating space S by connecting the edge portion 112 of the lower case 110 and the upper case 120 by heat fusion, and/or the like. Thus, an electrolyte and the electrode assembly 10 accommodated in the accommodating space S may be spatially and fluidly separated from the outside.

Referring to FIG. 1 and FIG. 2, the electrode lead 20 may be drawn from a side of the sealing portion 130. The sealing portion 130 may be around (e.g., surround) the electrode lead 20 to prevent any gap. For example, the sealing portion 130 may maintain sealing such that the electrode lead 20 is drawn, but the accommodating space S does not communicate with the outside.

Referring to FIGS. 2 to 5, the sealing portion 130 may include a terrace portion 131 and a wing portion 132.

The terrace portion 131 may extend from the first edge L1. In one or more embodiments, the terrace portion 131 may extend from the first edge L1 and extend in the first direction DR1.

The electrode lead 20 may be drawn from a side of the terrace portion 131. The terrace portion 131 may be provided to be around (e.g., surround) the electrode lead 20 without any gaps.

The wing portion 132 may be connected to the terrace portion 131 and may extend from the second edge L2. In one or more embodiments, the wing portion 132 may extend in the second direction DR2 from the second edge L2, but may have a side extending in the first direction DR1 so as to be connected to the terrace portion 131.

The bending portion 140 having a depth (e.g., a set or predetermined depth) may be formed to extend in the sealing portion 130. The bending portion 140 may reduce the thickness of the sealing portion 130 at a location where the bending portion 140 is formed to have the set or predetermined depth. Thus, the sealing portion 130 may be easily deformed in shape at the bending portion 140.

The bending portion 140 may be formed to extend in the shape of a line. In one or more embodiments, the bending portion 140 may be formed in the shape of a line having a set or predetermined depth such that the sealing portion 130 may be bent along the line formed by the bending portion 140.

Thus, the position at which the sealing portion 130 is bent may be determined by the bending portion 140.

Referring to FIG. 2, in one or more embodiments, the bending portion 140 may be formed by arranging a plurality of grooves having a set or predetermined depth at preset intervals. For example, the bending portion 140 may be formed to minimize or reduce an impact on the sealing portion 130, thereby preventing the rupture of the sealing portion 130. Thus, the stability of the sealing portion 130 may be improved.

In one or more embodiments, the depth (e.g., the predetermined depth) of the bending portion 140 may be at least about 40 µm but not more than about 60 µm.

When the depth of the bending portion 140 is less than about 40 µm, a difference between a thickness of the sealing portion 130 at the position where the bending portion 140 is formed and a thickness of the sealing portion 130 at another position may not be sufficient, such that deformation of the sealing portion 130 at the bending portion 140 may not easily occur.

In some embodiments, if (e.g., when) the depth of the bending portion 140 exceeds about 60 µm, the thickness of the sealing portion 130 at the position where the bending portion 140 is formed may become excessively thin, causing the rupture in the sealing portion 130.

Thus, if (e.g., when) the depth of the bending portion 140 is maintained at about 40 µm or more and about 60 µm or less, the bending portion 140 may determine the bending position of the sealing portion 130 while advantageously maintaining the stability of the sealing portion 130.

In one or more embodiments, the bending portion 140 may be formed in the sealing portion 130 by punching. In one or more embodiments, the stability of the sealing portion 130 may be maintained by minimizing or reducing an impact on a member forming the sealing portion 130. However, a method to form the bending portion 140 is not limited to punching, and a technique generally available to locally reduce the thickness of the sealing portion 130 may be applied.

Referring to FIG. 2, the bending portion 140 is illustrated as being formed in the lower case 110, but embodiments of the present disclosure are not limited thereto. In one or more embodiments, the bending portion 140 may be formed in at least one of the lower case 110 or the upper case 120.

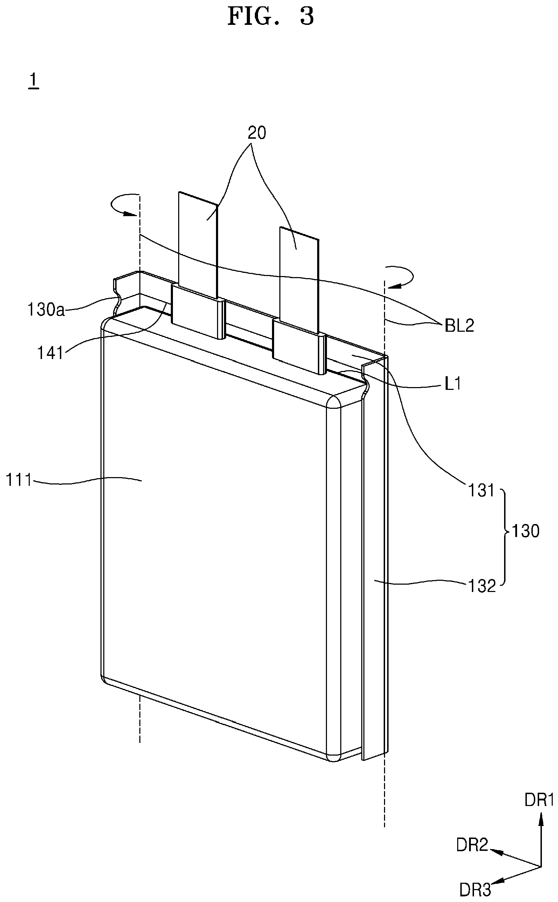

FIGS. 3 to 6 are views showing a process of partially deforming a shape of the pouch-type (kind) secondary battery of FIG. 2 according to one or more embodiments of the present disclosure.

Referring to FIG. 2 and FIG. 3, the bending portion 140 may include a first bending portion 141 and a second bending portion 142.

The first bending portion 141 may be formed spaced and/or apart (e.g., spaced apart or separated) from the first edge L1 by a preset interval. For example, the first bending portion 141 may determine the bending position of the sealing portion 130 such that the sealing portion 130 is bent at a position spaced and/or apart (e.g., spaced apart or separated) from the accommodating portion 111 by the preset interval.

The first bending portion 141 may be formed to extend in a direction parallel to the first edge L1. For example, the first bending portion 141 may determine a bending shape such that the sealing portion 130 is bent parallel to the accommodating portion 111.

The second bending portion 142 may be formed spaced and/or apart (e.g., spaced apart or separated) from the second edge L2 by a preset interval. For example, the second bending portion 142 may determine the bending position of the sealing portion 130 such that the sealing portion 130 is bent at a position spaced and/or apart (e.g., spaced apart or separated) from the accommodating portion 111 by the preset interval.

The second bending portion 142 may be formed to extend in a direction parallel to the second edge L2. For example, the second bending portion 142 may determine a bending shape such that the sealing portion 130 is bent parallel to the accommodating portion 111.

Referring to FIGS. 2 to 5, a notch portion 130a may be formed in the sealing portion 130.

The notch portion 130a may be formed on a side of the sealing portion 130 with a preset depth, thereby reducing a width of the sealing portion 130. In one or more embodiments, a pair of notch portions 130a may be formed to opposite (e.g., face) each other on the sealing portion 130, such that the width of the sealing portion 130 may be reduced between the notch portions 130a.

In one or more embodiments, the notch portion 130a may be formed in a semicircular shape such that the width of the sealing portion 130 may be formed to be smallest at the center of the semicircle.

For example, as the width of the sealing portion 130 decreases at a position where the notch portion 130a is formed, the sealing portion 130 may be easily bent at the position where the notch portion 130a is formed.

Thus, the notch portion 130a may determine the position at which the sealing portion 130 is bent.

Referring to FIGS. 2 to 5, the battery case 100 according to one or more embodiments of the present disclosure may have a side bent to seal the accommodating space S more reliably and improve energy density.

Hereinafter, a first bending line BL1 may be defined as an imaginary line extending from the first bending portion 141, and a second bending line BL2 may be defined as an imaginary line extending from the second bending portion 142. For example, the first bending line BL1 may be defined as the imaginary lines extending from opposite ends of the first bending portion 141, and the second bending line BL2 may be defined as the imaginary lines extending from opposite ends of second bending portion 142.

Referring to FIG. 3, the wing portion 132 may be bent toward the accommodating portion 111. The wing portion 132 may be bent toward the accommodating portion 111 to cover a side of the accommodating portion 111 and seal the accommodating space S.

In one or more embodiments, the wing portion 132 may be bent toward the accommodating portion 111 at the second bending portion 142. For example, the wing portion 132 may be bent toward the accommodating portion 111 with the second bending line BL2 as an axis.

Thus, a side of the accommodating portion 111 in the second direction DR2 may be covered with the wing portion 132, and a path through which the accommodating space S may communicate with the outside may be blocked.

The position at which the wing portion 132 is bent may be set in advance. For example, as the wing portion 132 is bent at the second bending portion 142, the position at which the wing portion 132 is bent may be set in advance by the second bending portion 142. For example, a distance by which the wing portion 132 is bent and spaced and/or apart (e.g., spaced apart or separated) from the accommodating portion 111 may be preset by the second bending portion 142.

Referring to FIG. 3, the terrace portion 131 may be bent from the first bending portion 141 toward the accommodating portion 111. The terrace portion 131 may be bent toward the accommodating portion 111 to cover a side of the accommodating portion 111 and seal the accommodating space S.

In one or more embodiments, the terrace portion 131 may be bent toward the accommodating portion 111 at the first bending portion 141. For example, the terrace portion 131 may be bent toward the accommodating portion 111 with the first bending line BL1 as an axis. Thus, a side of the accommodating portion 111 in the first direction DR1 may be covered with the terrace portion 131, and a path through which the accommodating space S may communicate with the outside may be blocked.

The position at which the terrace portion 131 is bent may be set in advance. For example, as the terrace portion 131 is bent at the first bending portion 141, the position at which the terrace portion 131 is bent may be set in advance by the first bending portion 141. For example, a distance by which the terrace portion 131 is bent and spaced and/or apart (e.g., spaced apart or separated) from the accommodating portion 111 may be preset by the first bending portion (141).

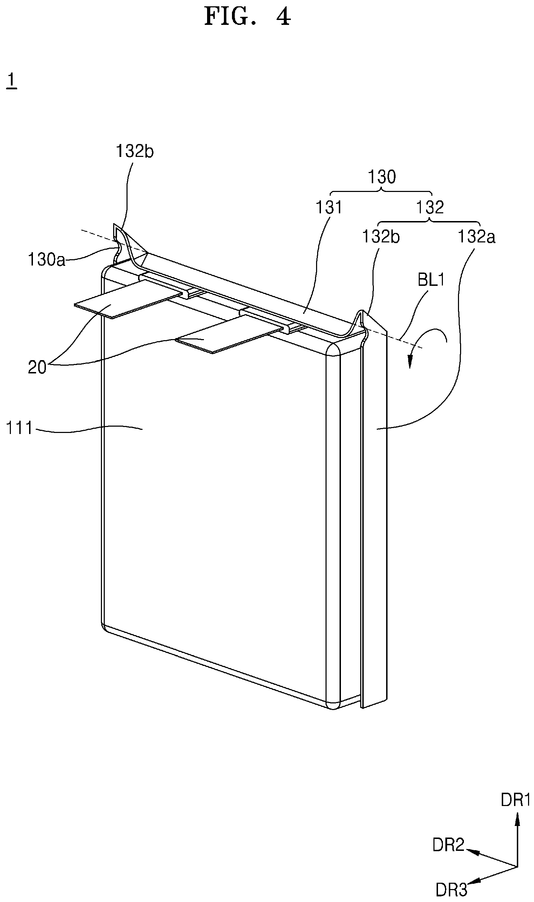

Referring to FIG. 4 and FIG. 5, the wing portion 132 may include a first side portion 132a and a second side portion 132b.

Referring to FIG. 4 and FIG. 5, the first side portion 132a may be defined as a region where the wing portion 132 is bent toward the accommodating portion 111 such that the accommodating portion 111 and the wing portion 132 overlap.

The wing portion 132 may be bent toward the accommodating portion 111 to form the first side portion 132a. In one or more embodiments, the wing portion 132 may be bent to cover a side of the accommodating portion 111, thereby minimizing or reducing a space occupied by the pouch-type (kind) secondary battery 1 in the second direction DR2. Thus, the energy density of the pouch-type (kind) secondary battery 1 may be increased.

In one or more embodiments, the wing portion 132 may be bent toward the accommodating portion 111 at the second bending portion 142. The second bending portion 142 may induce the sealing portion 130 to be bent at a position spaced and/or apart (e.g., spaced apart or separated) from the second edge L2 by a preset interval, such that the first side portion 132a may be arranged at a position spaced and/or apart (e.g., spaced apart or separated) from the accommodating portion 111 by the preset interval.

For example, a distance by which the first side portion 132a is spaced and/or apart (e.g., spaced apart or separated) from the accommodating portion 111 may be determined by the second bending portion 142. Thus, an interval may be secured between the first side portion 132a and the accommodating portion 111 to mount the protective member 150 to be described in more detail later on the first side portion 132a.

In one or more embodiments, the pouch-type (kind) secondary battery 1 with the wing portion 132 in a bent state may have a constant width. For example, the length of the pouch-type (kind) secondary battery 1 in the second direction DR2 may be constant.

Referring to FIG. 4 and FIG. 5, the second side portion 132b may be defined as a side of the wing portion 132 when the wing portion 132 and the terrace portion 131 are bent toward the accommodating portion 111 and protrude in a direction in which the electrode lead 20 is drawn.

The second side portion 132b may be bent toward the accommodating portion 111. In one or more embodiments, the second side portion 132b may be bent toward the accommodating portion 111 covered with the terrace portion 131 to cover a region of the terrace portion 131. Thus, the second side portion 132b may prevent the terrace portion 131 and the wing portion 132 that are bent toward the accommodating portion 111 from being unfolded again.

Referring to FIG. 4 and FIG. 5, the second side portion 132b may be bent from the first bending portion 141 toward the accommodating portion 111. For example, the second side portion 132b may be bent along the first bending line BL1, which is bent when the wing portion 132 is bent along the second bending line BL2.

For example, the first bending portion 141 may induce the second side portion 132b to be bent at a position spaced and/or apart (e.g., spaced apart or separated) from the first edge L1 by a preset interval, such that the second side portion 132b may be arranged at a position spaced and/or apart (e.g., spaced apart or separated) from the accommodating portion 111 by the preset interval.

The notch portion 130a may be formed (e.g., positioned) in the second side portion 132b such that a bending position may be determined. In one or more embodiments, the notch portion 130a may be formed at an end of the first bending portion 141 to reduce the width of the second side portion 132b, thereby enabling the second side portion 132b to be bent more easily.

The position at which the second side portion 132b is bent may be determined by the first bending portion 141 and the notch portion 130a. When the first bending portion 141 and the notched portion 130a are formed spaced and/or apart (e.g., spaced apart or separated) from the accommodating portion 111 by a preset interval in the first direction DR1, the second side portion 132b, even if (e.g., when) being bent, may not apply load to the electrode lead 20, thereby improving the structural stability of the pouch-type (kind) secondary battery 1.

In one or more embodiments, the pouch-type (kind) secondary battery 1 in a state of the terrace portion 131 and the second side portion 132b being bent may have a constant height such that a length of the pouch-type (kind) secondary battery 1 in the first direction DR1 may be formed constant.

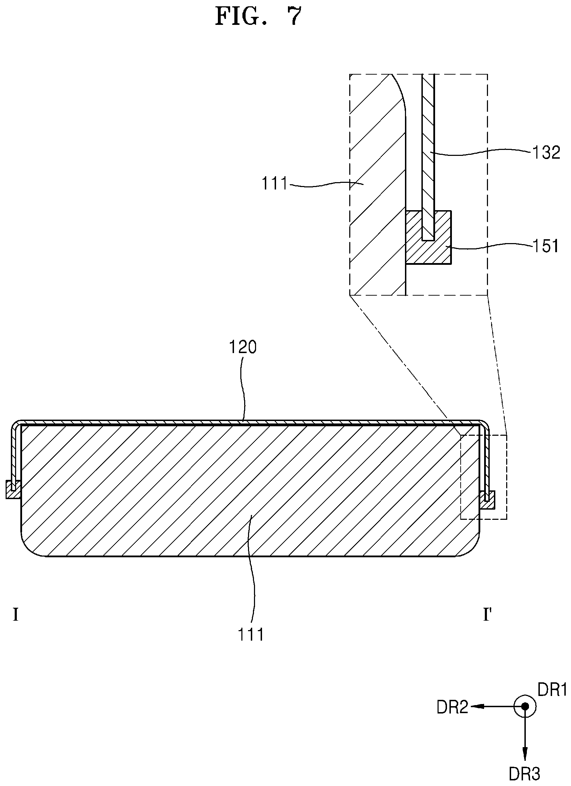

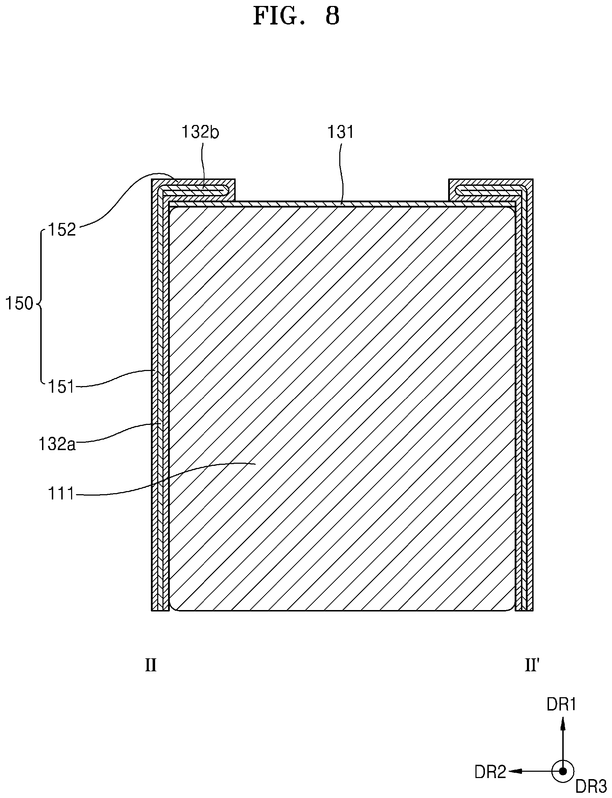

FIG. 7 is a cross-sectional view taken along the line I-I' of FIG. 6 according to one or more embodiments of the present disclosure, and FIG. 8 is a cross-sectional view taken along the line II-II' of FIG. 6 according to one or more embodiments of the present disclosure.

Referring to FIGS. 5 to 8, the battery case 100 according to one or more embodiments of the present disclosure may further include the protective member 150.

The protective member 150 may be mounted on a corner of the wing portion 132 to separate the inside of the pouch-type (kind) secondary battery 1 from the outside thereof. The protective member 150 may cover the corner of the wing portion 132, thereby preventing internal materials of the pouch-type (kind) secondary battery 1, such as an electrolyte, and/or the like, from coming into contact with the outside, thereby improving the airtightness and insulation of the pouch-type (kind) secondary battery 1.

An insertion groove into which the corner of the wing portion 132 is insertable may be formed in the protective member 150. The corner of the wing portion 132 may be inserted into the insertion groove of the protective member 150 such that a preset region may be covered with the protective member 150.

The protective member 150 may be provided in a bent shape. The protective member 150 may be provided in a shape that is bent on a side to allow the bent wing portion 132 to be inserted into the insertion groove of the protective member 150.

The protective member 150 may be bent at a position corresponding to the first bending portion 141. For example, the position at which the protective member 150 is bent may be determined by the first bending portion 141.

In one or more embodiments, the protective member 150 may be bent at a position corresponding to the first bending portion 141 where the wing portion 132 is bent such that the insertion groove of the protective member 150 may have a shape corresponding to the corner of the wing portion 132.

Thus, the protective member 150 may be mounted on the wing portion 132 in the bent state at the first bending portion 141, and a side of the wing portion 132 may be covered.

The protective member 150 may be formed of an insulating member such as rubber having a certain strength, and/or the like. In one or more embodiments, the protective member 150 may be integrally formed using an insulating member having a certain strength.

For example, the protective member 150 may be mounted on the wing portion 132 in the bent state at the first bending portion 141 to maintain the bent shape of the wing portion 132.

Thus, a bending structure of the battery case 100 may be stably maintained, and the airtightness and insulation of the pouch-type (kind) secondary battery 1 may be improved.

Referring to FIGS. 5 to 8, the protective member 150 may have a first spacer 151 and a second spacer 152.

The first spacer 151 may cover a side of the first side portion 132a. In one or more embodiments, the first spacer 151 may formed to extend in the extension direction of the first side portion 132a, and may include an insertion groove into which the first side portion 132a is insertable.

The first spacer 151 may be mounted on the first side portion 132a to allow an edge of the first side portion 132a to be inserted into the insertion groove. Thus, the edge of the first side portion 132a may be spatially separated from the outside by the first spacer 151, and the insulation of the pouch-type (kind) secondary battery 1 may be improved.

A length by which the first spacer 151 extends may be substantially the same as a length of the first side portion 132a. When the lengths of the first spacer 151 and the first side portion 132a are formed to be substantially the same as each other, all edges of the first side portion 132a may be covered if (e.g., when) the first spacer 151 is mounted on the first side portion 132a.

The second spacer 152 may cover the second side portion 132b. In one or more embodiments, the second spacer 152 may include an insertion groove into which the second side portion 132b is insertable such that the second spacer 152, if (e.g., when) mounted on the second side portion 132b, may cover a side of the second side portion 132b.

The second spacer 152 may be mounted on the second side portion 132b to allow the corner of the second side portion 132b to be inserted into the insertion groove. Thus, the corner of the second side portion 132b may be spatially separated from the outside by the second spacer 152, and the insulation of the pouch-type (kind) secondary battery 1 may be improved.

The second spacer 152 may be connected to the first spacer 151. In one or more embodiments, the second spacer 152 may extend from an end of the first spacer 151. Thus, the first spacer 151 and the second spacer 152 may cover the first side portion 132a and the second side portion 132b without any gaps, thereby improving that the insulation of the pouch-type (kind) secondary battery (1).

Hereinafter, the configuration, operating principle, and effects of the battery case 100 and the pouch-type (kind) secondary battery 1 including the same according to one or more embodiments of the present disclosure will be described in more detail.

Referring to FIG. 1, the battery case 100 may include the lower case 110 and the upper case 120.

The lower case 110 may include the accommodating portion 111 that may accommodate the electrode assembly 10, and the upper case 120 may cover the accommodating space S formed by the accommodating portion 111 to separate the electrode assembly 10 and the electrolyte accommodated therein from an external space.

Referring to FIG. 1, the electrode lead 20 may be attached to the electrode assembly 10 and may be arranged between the lower case 110 and the upper case 120 to electrically connect the electrode assembly 10 to the outside.

Referring to FIG. 1, the outer periphery L forming the boundary of the accommodating portion 111 may be formed in the accommodating portion 111, and the outer periphery (L) of the accommodating portion 111 may be defined by the first edge L1 and the second edge L2.

Referring to FIG. 2, the sealing portion 130 may be formed by connecting the edge portion 112 of the lower case 110 to the upper case 120 by heat fusion and/or the like while opposite to (e.g., facing) each other.

The sealing portion 130 may extend along the outer periphery (L) of the accommodating portion 111 to seal the accommodating portion 111.

The sealing portion 130 may include the terrace portion 131 extending from the first edge L1 and the wing portion 132 connected to the terrace portion 131 and extending from the second edge L2.

Referring to FIGS. 2 to 6, the bending portion 140 having a preset depth may be formed in the sealing portion 130 such that the position at which the sealing portion 130 is bent may be determined.

Referring to FIGS. 2 and 3, the bending portion 140 may include the first bending portion 141 formed spaced and/or apart (e.g., spaced apart or separated) from the first edge L1 by a preset interval, and the second bending portion 142 formed from the second edge L2 by a preset interval.

The terrace portion 131 may be bent toward the accommodating portion 111 at the first bending portion 141, and the wing portion 132 may be bent toward the accommodating portion 111 at the second bending portion 142. For example, the first bending portion 141 and the second bending portion 142 may determine the position at which each of the terrace portion 131 and the wing portion 132 is bent.

For example, the first bending portion 141 may determine the position at which the electrode lead 20 is bent and the position at which the second side portion 132b is bent, thereby previously setting a distance by which each of the electrode lead 20 and the second side portion 132b is arranged apart from the accommodating portion 111.

In one or more embodiments, the second bending portion 142 may preset the distance by which the first side portion 132a is arranged apart from the accommodating portion 111, by determining the position at which the wing portion 132 is bent.

Thus, the space between the accommodating portion 111 and the wing portion 132 may be secured to stably protect the electrode lead 20 and mount the protective member 150 on the wing portion 132.

The notch portion 130a may be formed in the sealing portion 130 such that the sealing portion 130 may be bent at the position where the notch portion 130a is formed.

In one or more embodiments, the notch portion 130a may be formed in the sealing portion 130 at the position where the second side portion 132b is formed. For example, if (e.g., when) the terrace portion 131 and the wing portion 132 are bent toward the accommodating portion 111 to form the second side portion 132b, the second side portion 132b may be bent at the position where the notch portion 130a is formed and thus may be bent toward the accommodating portion 111.

In one or more embodiments, the notch portion 130a may be formed at opposite ends of the first bending portion 141 to determine the bending position of the terrace portion 131 or the second side portion 132b together with the first bending portion 141.

Referring to FIGS. 5 to 8, the battery case 100 according to one or more embodiments of the present disclosure may further include the protective member 150.

The protective member 150 may be mounted on the corner of the wing portion 132 to improve the airtightness and insulation of the pouch-type (kind) secondary battery 1, and may include the first spacer 151 and the second spacer 152.

The first spacer 151 may be mounted on the first side portion 132a. The first side portion 132a may be inserted into the insertion groove formed in the first spacer 151 such that a preset region of the first side portion 132a may be covered with the first spacer 151.

The second spacer 152 may be mounted on the second side portion 132b. The second side portion 132b may be inserted into the insertion groove formed in the second spacer 152 such that a preset region of the second side portion 132b may be covered with the second spacer 152.

Thus, the airtightness of the first side portion 132a and the second side portion 132b may be improved. For example, the insulation of the pouch-type (kind) secondary battery (1) may be improved by improving the airtightness of the wing portion 132.

The first spacer 151 and the second spacer 152 may be formed integrally. In one or more embodiments, the wing portion 132 may be formed in a shape in which the first spacer 151 and the second spacer 152 are connected at a preset angle using an insulating material having a certain strength.

Thus, the protective member 150 may be mounted on the wing portion 132 to support the bending structure of the wing portion 132 and improving the airtightness and insulation of the pouch-type (kind) secondary battery 1.

In the context of the present disclosure and unless otherwise defined, the terms "use," "using," and "used" may be considered synonymous with the terms "utilize," "utilizing," and "utilized," respectively.

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, or 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

A battery manufacturing apparatus/system, a battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

The scope of the present disclosure should not be determined by being limited to the-described embodiments, and not only the appended claims but also any range equivalent to or equivalently changed from the claims falls within the scope of the present disclosure.

While the present disclosure is described by example embodiments and drawings, the present disclosure is not limited thereby and one or more suitable modifications and changes may be made by those of ordinary skill in the art within the spirit of the present disclosure and the equivalent range to the claims set forth.

A battery module and a battery pack including the same according to one or more embodiments of the present disclosure may improve airtightness and protect each component of the secondary battery by utilizing a bending structure of a case of the pouch-type (kind) secondary battery.

However, effects that may be obtained through the present disclosure are not limited to the-described effects, and other technical effects not mentioned may be clearly understood by those of ordinary skill in the art from the description of the present disclosure described herein.

## Claims

1. A battery case (100) comprising:
an accommodating portion (111) accommodating an electrode assembly (10) having an electrode lead (20) attached thereto; and
a sealing portion (130) provided along an outer periphery (L) of the accommodating portion (111), sealing the accommodating portion (111), and having a side from which the electrode lead (20) is drawn,
wherein the outer periphery (L) of the accommodating portion (111) is defined by a first edge (L1) on which the electrode lead (20) is arranged and a second edge (L2) forming a preset angle with the first edge (L1), and
a bending portion (140) having a predetermined depth is formed to extend in the sealing portion, and the sealing portion (130) is bent from the bending portion (140) toward the accommodating portion.

2. The battery case (100) of claim 1, wherein the bending portion (140) comprises a first bending portion (141) that is spaced apart from the first edge (L1) by a preset interval and extends in a direction parallel to the first edge (L1).

3. The battery case (100) of claim 2, wherein
the sealing portion (130) comprises a terrace portion (131) extending from the first edge (L1) and a wing portion connected to the terrace portion (131) and extending from the second edge (L2),
the wing portion is bent toward the accommodating portion (111),
the terrace portion (131) is bent from the first bending portion (141) toward the accommodating portion (111), and
a side of the wing portion (132) protruding in a direction in which the electrode lead (20) is drawn is bent toward the accommodating portion (111) in the first bending portion (141).

4. The battery case (100) of claim 3, further comprising a protective member (150) having an insertion groove formed therein to allow a corner of the wing portion (132) to be inserted thereinto and covering a preset region of the wing portion (132).

5. The battery case (100) of claim 4, wherein the protective member (150) has a shape that is bent at a position corresponding to the first bending portion (141).

6. The battery case (100) of claim 4 or 5, wherein
the wing portion (132) comprises a first side portion (132a) covering a side of the accommodating portion (111) and a second side portion (132b) covering a side of the terrace portion (131), and
the protective member (150) comprises a first spacer (151) covering the first side portion (132a) and a second spacer covering the second side portion (132b).

7. The battery case (100) of claims 1 to 6, wherein the bending portion (140) comprises a second bending portion (142) that is spaced apart from the second edge (L2) by a preset interval and extends in a direction parallel to the second edge (L2).

8. The battery case (100) of claims 1 to 7, wherein the sealing portion (130) comprises a notch portion formed at opposite ends of the bending portion (140).

9. The battery case (100) of claims 1 to 8, further comprising an upper case (120) and a lower case (110) which face each other to form the sealing portion (130),
wherein the bending portion (140) is formed in at least one of the upper case (120) or the lower case (110).

10. A pouch-type secondary battery (1) comprising:
an electrode assembly;
an electrode lead (20) attached to the electrode assembly; and
a battery case (100) comprising an accommodating portion (111) accommodating an electrode assembly (10) having an electrode lead (20) attached thereto and a sealing portion (130) provided along an outer periphery (L) of the accommodating portion (111), sealing the accommodating portion (111), and having a side from which the electrode lead (20) is drawn,
wherein the outer periphery (L) of the accommodating portion (111) is defined by a first edge (L1) on which the electrode lead (20) is arranged and a second edge (L2) forming a preset angle with the first edge (L1), and
a bending portion (140) having a predetermined depth is formed to extend in the sealing portion, and the sealing portion (130) is bent from the bending portion (140) toward the accommodating portion (111).

11. The pouch-type secondary battery (1) of claim 10, wherein the bending portion (140) comprises a first bending portion (141) that is spaced apart from the first edge (L1) by a preset interval and extends in a direction parallel to the first edge (L1).

12. The pouch-type secondary battery (1) of claim 11, wherein the sealing portion (130) comprises:
a terrace portion (131) extending from the first edge (L1); and
a wing portion (132) connected to the terrace portion (131) and extending from the second edge (L2),
wherein the wing portion (132) is bent toward the accommodating portion (111),
the terrace portion (131) is bent from the first bending portion (141) toward the accommodating portion, and
the wing portion (132) protruding in a direction in which the electrode lead (20) is drawn is bent toward the accommodating portion (111) in the first bending portion (141).

13. The pouch-type secondary battery (1) of claim 12, further comprising a protective member (150) having an insertion groove formed therein to allow a corner of the wing portion (132) to be inserted thereinto and covering a preset region of the wing portion (132) and/or wherein the protective member (150) has a shape that is bent at a position corresponding to the first bending portion (141).

14. The pouch-type secondary battery (1) of claims 10 to 14, wherein the depth (e.g., the predetermined depth) of the bending portion (140) is at least about 40 µm but not more than about 60 µm.

15. The pouch-type secondary battery (1) of claims 10 to 14, wherein the bending portion (140) comprises a second bending portion (142) that is spaced apart from the second edge (L2) by a preset interval and extends in a direction parallel to the second edge (L2).
